# FASCICULE DE BREVET EUROPEEN

(11) **EP 1 098 781 B1**
(45) Date de publication et mention de la délivrance du brevet: **04.09.2002**
(21) Numéro de dépôt: 99936515.8
(22) Date de dépôt: 12.07.1999
(51) Int. Cl.: B60C 15/06

(54) **BOURRELET RENFORCE DE PNEUMATIQUE RADIAL**
VERSTÄRKTE RADIALREIFENWULST
REINFORCED RADIAL TYRE BEAD

(30) Priorité: 23.07.1998 FR 9809451
(43) Date de publication de la demande: 16.05.2001
(73) Titulaire: Sociéte de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: AUXERRE, Pascal, F-63130 Royat (FR)
(74) Mandataire: Diernaz, Christian
(86) Numéro de dépôt international: EP9904877
(87) Numéro de publication internationale: WO00005085

(56) Documents cités:
- FR-A- 2 356 528
- FR-A- 2 435 359

## Description

La présente invention concerne un pneumatique à armature de carcasse radiale, et plus particulièrement à un pneumatique "Poids Lourds", destiné à équiper des véhicules tels que les camions, tracteurs routiers, autobus, remorques et autres, et dans lequel une nouvelle structure de renforcement des bourrelets est adaptée en vue de l'amélioration de l'endurance desdits bourrelets.

En général, un pneumatique du type considéré comprend une armature de carcasse formée d'au moins une nappe de câbles métalliques, ancrée dans chaque bourrelet à au moins une tringle, en formant un retournement. L'armature de carcasse est radialement surmontée d'une armature de sommet, composée d'au moins deux nappes de câbles métalliques, croisés d'une nappe à la suivante en formant avec la direction circonférentielle des angles compris entre 10° et 45°. Les retournements d'armature de carcasse sont généralement renforcés par au moins une nappe de câbles métalliques orientés à un faible angle par rapport à la direction circonférentielle.

Dans le cas de la présence d'une seule nappe de renforcement de bourrelet, cette dernière peut être située le long du retournement d'armature de carcasse avec une extrémité radialement supérieure située au dessus ou au dessous de l'extrémité radialement supérieure du retournement d'armature de carcasse. Quant à l'extrémité radialement inférieure d'une telle nappe, elle est généralement située soit sur une droite parallèle à l'axe de rotation et passant approximativement par le centre de gravité de la section méridienne de la tringle d'ancrage de l'armature de carcasse, dans le cas d'un pneumatique possédant des bourrelets destinés à être montés sur des sièges de jante inclinés à 15° ± 2°, soit sur une droite parallèle à l'axe de rotation passant par un point situé entre le centre de gravité de la section méridienne de la tringle d'ancrage et le point de largeur axiale maximale de l'armature de carcasse, dans le cas de pneumatique possédant des bourrelets destinés à être montés sur des sièges de jante inclinés à 0° ou à 5° ± 1°. Dans ce deuxième cas, la nappe de renforcement du bourrelet est alors enroulée autour de la tringle, de sorte à présenter un brin axialement extérieur et un brin axialement intérieur, l'extrémité radialement supérieure du brin axialement intérieur étant généralement située au dessous de l'extrémité radialement supérieure du brin axialement extérieur.

La solution connue a pour but d'éviter la déradialisation des câbles du retournement de l'armature de carcasse, ainsi que de minimiser les déformations radiales et circonférentielles subies par l'extrémité dudit retournement, et par la couche de caoutchouc extérieure recouvrant le bourrelet et assurant la liaison avec la jante.

Dans d'autres cas, la nappe de renforcement métallique a été remplacée par plusieurs nappes, textiles par exemple, situées axialement soit du même côté du retournement, soit de part et d'autre dudit retournement, soit encore en partie le long du retournement et en partie le long de l'armature de carcasse. Une autre variante consiste à mettre deux nappes de renforcement le long du retournement, de part et d'autre dudit retournement, et une troisième nappe le long de l'armature de carcasse axialement à l'extérieur de ladite armature.

La durée de vie des pneumatiques "Poids-Lourds", du fait des progrès accomplis, du fait que certains roulages sont rendus moins pénalisants en ce qui concerne l'usure de la bande de roulement, est devenue telle qu'il est encore nécessaire d'améliorer l'endurance des bourrelets, et plus particulièrement des pneumatiques soumis à des roulages prolongés, roulages induisant souvent une température élevée des bourrelets, du fait des températures atteintes par les jantes de montage.

Afin d'améliorer l'endurance d'un pneumatique appelé à porter de lourdes charges et ayant des bourrelets destinés à être montés sur des sièges de jante plats ou inclinés à 5°, le document FR 2 356 528 (qui comporte tous les éléments du préambule de la revendication 1) propose de disposer à l'intérieur de l'armature de carcasse et de son retournement une armature de renforcement d'éléments métalliques radiaux présentant un grand allongement, ladite armature étant enroulée autour de la tringle pour former deux brins, le brin axialement extérieur ayant une extrémité radialement au-dessus d'une part du retournement de l'armature de carcasse et d'autre part de l'extrémité supérieure d'une deuxième armature de renforcement d'éléments orientés par rapport à la direction circonférentielle avec un certain angle.

Dans le même but, la demande Française FR 2 776 238 (application 98/03570 non publiée à la date de dépôt de la présente application) propose, contrairement à l'enseignement précédent, un pneumatique comprenant au moins une armature de carcasse radiale, formée d'au moins une nappe d'éléments de renforcement inextensibles et ancrée dans chaque bourrelet B à une tringle pour former un retournement dont l'extrémité est situé à une distance radiale H_{RNC} de la base de bourrelet, chaque bourrelet B étant renforcé par au moins deux armatures additionnelles de renforcement, au moins une première armature formée d'éléments de renforcement métalliques radiaux et au moins une deuxième armature formée d'éléments faisant avec la direction circonférentielle un angle α tel que 0° ≤ α ≤ 45°, caractérisé en ce que, vue en section méridienne, la première armature de renforcement formée d'éléments métalliques radiaux, est enroulée autour de la tringle d'ancrage de l'armature de carcasse à l'extérieur de ladite armature de carcasse, pour former deux brins de sorte que l'extrémité radialement supérieure du brin axialement extérieur soit radialement située à une distance H_{LE} de la base du bourrelet, comprise entre 65% et 95% de la distance H_{RNC}, la deuxième armature n'étant pas enroulée autour de ladite tringle d'ancrage.

L'armature de carcasse du pneumatique radial tel que décrit ci-dessus, monté sur sa jante de service et gonflé à la pression recommandée, a, dans un flanc, un profil méridien régulièrement convexe entre approximativement les zones de raccordement avec le profil méridien de l'armature de sommet et avec le bourrelet. En particulier, à partir du rayon où l'armature de carcasse subit l'influence de la(des) nappe(s) de renforcement de bourrelets à éléments de renforcement inclinés par rapport à la direction radiale, ladite armature possède dans le bourrelet un profil méridien concave, sensiblement incurvé dans le sens opposé à la courbure dans les flancs, c'est-à-dire sensiblement parallèle à la courbure des rebords de jante à partir d'un point d'inflexion situé radialement approximativement au niveau de l'extrémité radialement supérieure de la nappe de renforcement de bourrelet à éléments inclinés, placée axialement à l'extérieur le long du retournement d'armature de carcasse. De manière générale, le profil méridien de toute armature de renforcement de bourrelet, présente axialement à l'intérieur ou à l'extérieur de la partie non retournée d'armature de carcasse, est sensiblement parallèle au profil méridien de la dite partie non retournée.

Les études et essais de la demanderesse l'ont conduit à améliorer l'endurance dudit pneumatique, ayant des bourrelets destinés à être montés sur des sièges de jante plats ou inclinés à 5°, en utilisant différemment l'armature de renforcement de bourrelet à éléments radiaux. Le pneumatique de hauteur sur jante H, conforme à l'invention et comprenant au moins une armature de carcasse radiale, formée d'au moins une nappe d'éléments de renforcement inextensibles et ancrée dans chaque bourrelet B à une tringle pour former un retournement dont l'extrémité est situé à une distance radiale H_{RNC} de la base D de la tringle, chaque bourrelet B étant renforcé par au moins deux armatures additionnelles de renforcement, au moins une première armature formée d'éléments de renforcement métalliques radiaux et au moins une deuxième armature formée d'éléments métalliques faisant avec la direction circonférentielle un angle α tel que 0° ≤ α ≤ 45°, est caractérisé en ce que, vue en section méridienne, la première armature de renforcement est formée d'au moins une nappe d'éléments inextensibles, enroulée autour de la tringle d'ancrage de l'armature de carcasse à l'intérieur de ladite armature de carcasse, pour former deux brins, de sorte que le brin axialement intérieur, entre l'extrémité radialement inférieure A de son bord radialement supérieur, adjacent à l'armature de carcasse, et son point de tangence T à la tringle d'ancrage suive un tracé AT rectiligne dit du plus court chemin, et que l'extrémité radialement supérieure dudit brin axialement intérieur soit radialement située à une distance H_{LI} de la base de la tringle D, comprise entre 0,216 et 0,432 fois la hauteur H, le brin axialement extérieur situé axialement à l'intérieur du retournement de l'armature de carcasse ayant son extrémité radialement supérieure radialement moins éloignée de l'axe de rotation que l'extrémité du retournement d'armature de carcasse et la distance H_{LE} séparant ladite extrémité de la base D de la tringle étant comprise entre 0,2 et 0,8 fois la hauteur H_{RNC} du retournement d'armature de carcasse, la deuxième armature d'éléments inclinés par rapport à la direction radiale n'étant, pas enroulée autour de ladite tringle d'ancrage et disposée axialement à l'extérieur du retournement d'armature de carcasse.

Il faut entendre par tracé rectiligne un tracé qui peut différer légèrement de la droite, et dans le cas de pneumatiques concernés par l'invention, le tracé du brin axialement intérieur de la nappe d'éléments de renforcement radiaux du bourrelet sera aussi dit rectiligne s'il est courbe, concave ou convexe, présentant une flèche par rapport à la droite au plus égale à 2 mm.

Les éléments de renforcement radiaux de la première nappe de l'armature de renforcement de bourrelet sont de préférence des éléments métalliques inextensibles, en acier et sous forme de câbles.

Il est avantageux, en vue d'améliorer la résistance de l'armature de carcasse aux ruptures d'éléments de renforcement se produisant dans ses portions faisant partie intégrante des bourrelets, de conférer aux dites portions le même profil que celui des nappes de renforcement de bourrelet à éléments radiaux, c'est-à-dire un profil rectiligne.

Pour favoriser la reprise des efforts méridiens du retournement d'armature de carcasse, et ainsi améliorer la résistance à l'initiation et propagation des fissures de caoutchouc prenant naissance à l'extrémité du retournement d'armature de carcasse, il est particulièrement avantageux d'adjoindre à la première nappe de renforcement d'éléments radiaux une deuxième nappe des dits éléments. Dans ce cas, la première nappe d'éléments, dont les deux brins sont axialement situés entre la nappe de carcasse et son retournement, aura l'extrémité radialement supérieure du brin axialement extérieur très proche de la tringle d'ancrage et la distance séparant ladite extrémité de la base du bourrelet sera inférieure à la hauteur du crochet de jante, sur laquelle sera monté le pneumatique. Quant à la deuxième nappe, elle sera enroulée autour de la tringle d'ancrage à l'extérieur de la nappe de carcasse et son retournement, de sorte à former deux brins, l'extrémité du brin axialement extérieur étant distant de la base du bourrelet d'une quantité H_{LE2} comprise entre 0,4 et 1,2 fois la distance H_{RNC}, et l'extrémité du brin axialement intérieur H_{LI2} étant distant de ladite base de la tringle d'une quantité inférieure à la hauteur du crochet de jante. La dite deuxième nappe de renforcement étant axialement à l'extérieur du retournement de carcasse concave, aura aussi préférentiellement un tracé de plus court chemin, sans cependant être obligatoirement rectiligne. Comme dans le cas de la première nappe, les éléments de renforcement de la deuxième nappe sont des éléments métalliques inextensibles et préférentiellement des câbles en acier, les meilleurs résultats étant obtenus par l'emploi de câbles en acier dans toutes les nappes présentes dans le bourrelet.

Les caractéristiques de l'invention seront mieux comprises à l'aide de la description qui suit et qui se réfère au dessin, illustrant à titre non limitatif des exemples d'exécution, et sur lequel :
- la figure 1 représente schématiquement une première variante de bourrelet conforme à l'invention,
- la figure 2 représente schématiquement une deuxième variante de bourrelet conforme à l'invention, le bourrelet étant globalement aminci,
- la figure 3 représente schématiquement une troisième variante préférentielle de l'invention.

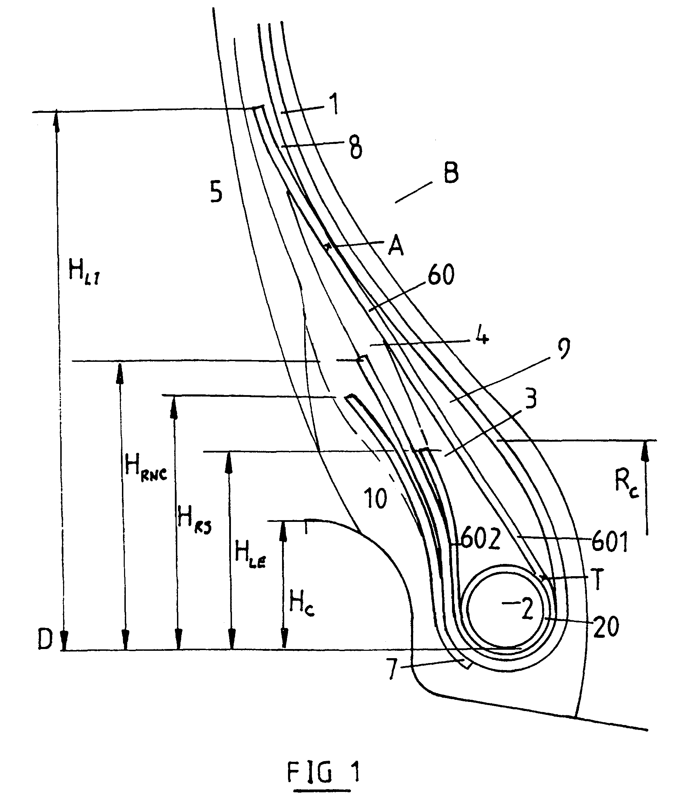

Le bourrelet B représenté sur la figure 1 est celui d'un pneumatique D 20 X, destiné à être monté sur une jante comportant des sièges de jante inclinés à 5°. Ledit bourrelet est renforcé par une tringle 2. Autour de ladite tringle 2 est ancrée une armature de carcasse 1 composée d'une seule nappe de câbles métalliques. L'ancrage se fait par un retournement 10 autour de la couche 20 de mélange caoutchouteux qui recouvre la tringle 2, et la distance radiale H_{RNC} séparant l'extrémité radialement supérieure dudit retournement 10 de la base D, (ladite base étant par convention représentée par la droite parallèle à l'axe de rotation passant par le point de la tringle 2 le plus rapproché dudit axe de rotation), étant égale, dans l'exemple étudié du pneumatique de dimension D 20 X, à 0,27 fois la hauteur H du pneumatique sur jante, cette dernière étant la distance radiale séparant le point du pneumatique radialement le plus éloigné de l'axe de rotation de la droite de mesure du diamètre nominal de la jante de montage, et égale à 268 mm. Entre l'armature de carcasse 1 et son retournement 10, radialement au dessus de la tringle 2, est disposé un premier bourrage de tringle 3 en mélange caoutchouteux de dureté Shore A généralement élevée, ledit premier bourrage 3 étant prolongé radialement par un deuxième bourrage 4 en mélange caoutchouteux de dureté Shore moins élevée que la précédente et l'extrémité radialement supérieure dudit bourrage 4 étant sensiblement située au niveau de la largeur axiale maximale du pneumatique.

L'armature de carcasse 1 du pneumatique, monté sur sa jante de service et gonflé à la pression recommandée, a dans un flanc un profil méridien régulièrement convexe entre approximativement les zones de raccordement avec le profil méridien de l'armature de sommet (non montrées) et avec le bourrelet B. En particulier, à partir du point d'inflexion de rayon R_{C}, situé radialement approximativement au niveau de l'extrémité radialement supérieure de la nappe de renforcement usuelle de bourrelet 7 placée le long du retournement d'armature de carcasse et ou l'armature de carcasse subit l'influence de ladite nappé de renforcement 7 de bourrelet, ladite armature de carcasse possède un profil méridien concave, incurvé dans le sens opposé à l'incurvation dans les flancs, c'est-à-dire sensiblement parallèle à la courbure des rebords de jante à partir dudit point d'inflexion.

Axialement à l'extérieur de la partie non retournée de la nappe de carcasse 1 et, après retournement autour de la tringle 2, axialement à l'intérieur du retournement 10 de la nappe 1, est disposée une première armature de renforcement 6 de bourrelet composée, dans l'exemple décrit, d'une seule nappe 60, de manière à former deux brins un brin axialement intérieur 601 et un brin axialement extérieur 602. Les extrémités radialement supérieures respectivement des deux brins 601 et 602 sont situées par rapport à la base du bourrelet à des hauteurs H_{LI} et H_{LE} respectivement égales à 86 mm et 38 mm, la distance H_{LE} étant égale à 65% de la distance H_{RNC}. La nappe 60 de ladite première armature est formée de fils ou câbles métalliques radiaux et dans l'exemple décrit orientés à 90° par rapport à la direction circonférentielle (seront considérés comme radiaux des éléments de renforcement faisant avec la direction circonférentielle un angle compris dans l'intervalle -85°, +85°). Les deux extrémités, du retournement de l'armature de carcasse et du brin axialement extérieur de la nappe de renforcement 60 respectivement, sont axialement à l'extérieur recouverts par un troisième bourrage 5, dit de remplissage et prenant appui d'une part sur le deuxième bourrage de tringle 4 et sur les parties de nappes 601 et 10. Le bord du brin axialement intérieur 601 de ladite nappe 60, et il faut entendre par bord d'une nappe de renforcement une partie de là dite nappe ayant à partir de son extrémité une longueur au moins'égale à 15 mm, est axialement sensiblement parallèle à la partie non retournée de la nappe de carcasse 1, tout en étant désaccouplé de la dite partie par une couche de mélange caoutchouteux 8. Radialement à l'intérieur, ledit bord est prolongé par une portion rectiligne, d'une part tangente en A au profil méridien dudit bord, puis parallèle sur une très courte distance au profil méridien convexe de la nappe de carcasse 1 et d'autre part tangente en T au contour extérieur de la tringle 2 enrobée. Entre l'armature de carcasse 1 et ladite portion rectiligne est placé un profilé de remplissage 9 en mélange caoutchouteux.

Quant à la deuxième armature de renforcement de bourrelet 7, elle est formée, dans l'exemple décrit, d'une nappe 7 de câbles métalliques inextensibles en acier parallèles entre eux dans la nappe et faisant avec la direction circonférentielle un angle de 22°, ladite nappe 7 étant située axialement à l'extérieur du retournement d'armature de carcasse et ayant d'une part une extrémité radialement supérieure située à une distance H_{RS} de la base D égale à 50 mm, c'est-à-dire radialement au dessus de l'extrémité du brin axialement extérieur 602 de la nappe 60 de la première armature de renforcement 6)de bourrelet, et une extrémité radialement inférieure pratiquement située au niveau de la base du bourrelet.

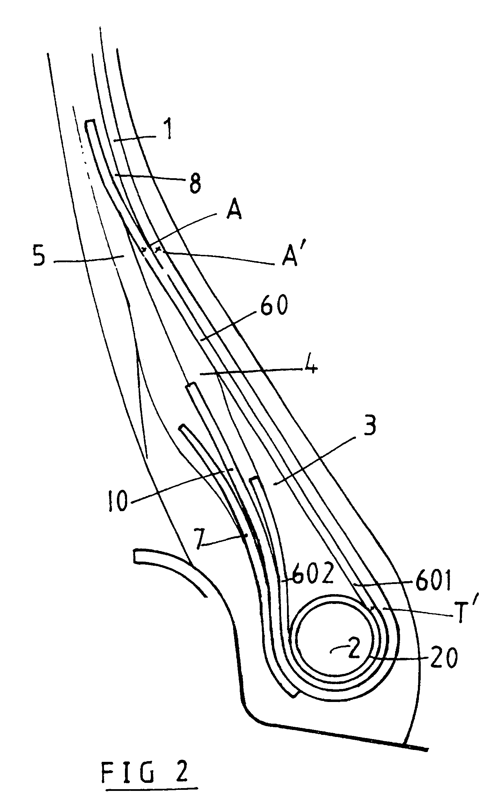

La, variante montrée sur la figure 2 concerne le profil méridien de l'armature de carcasse 1, et plus particulièrement le profil dans le bourrelet du pneumatique : à partir du point A' disposé sur la même droite parallèle à l'axe de rotation que le point A décrit précédemment, ladite armature possède un profil méridien dont le tracé, vu en section transversale, est parallèle au tracé que présente la portion rectiligne du brin axialement intérieur de la nappe de renforcement 60, ledit tracé devenant tangent avec la tringle 2 en T'. Ladite variante permet un amincissement notoire du bourrelet, d'où une moindre température de fonctionnement avec toutes les heureuses conséquences sur l'endurance à la fatigue d'un tel bourrelet, ainsi qu'une diminution de poids du pneumatique appréciable.

Comme dans le cas de l'exemple montré sur la figure 1, la structure du bourrelet B est complétée par la présence d'une deuxième armature de renforcement 7 de bourrelet, formée aussi d'une nappe 7 de câbles métalliques inextensibles en acier parallèles entre eux dans la nappe et faisant avec la direction circonférentielle un angle de 22°, ladite nappe 7 étant située axialement à l'extérieur du retournement d'armature de carcasse et ayant des extrémités radialement supérieure et radialement inférieure situées comme dans le cas de la figure 1.

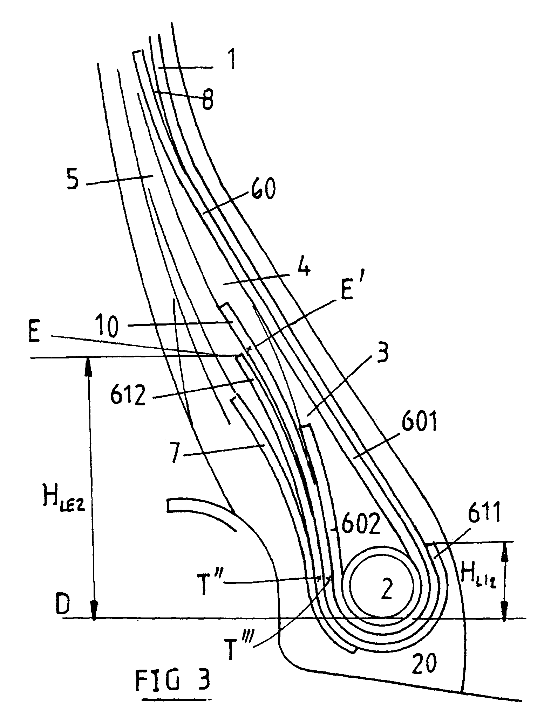

La troisième variante, montrée sur la figure 3, est directement dérivée de celle décrite ci-dessus et montrée sur la figure 2. Elle en diffère fondamentalement par la présence d'une deuxième nappe 61 d'armature de renforcement 6, composée d'éléments de renforcement métalliques radiaux et enroulée autour de la tringle 2, pour former deux brins : un brin axialement extérieur 612, situé axialement à l'extérieur du retournement 10 d'armature de carcasse 1 et dont l'extrémité radialement supérieure se trouve à une distance radiale H_{LE2} de la base du bourrelet égale à 58 mm, soit 0,78 fois la hauteur H_{RNC} dudit retournement 10, et un brin axialement intérieur 611, situé axialement à l'intérieur de la partie non retournée de la nappe de carcasse et dont l'extrémité radialement supérieure se trouve à une distance radiale H_{LI2} de la base du bourrelet inférieure à la hauteur H_{C} du crochet de jante, sur laquelle sera monté le pneumatique. Le profil du brin axialement extérieur de ladite deuxième nappe 61 d'armature de renforcement de bourrelet 6 a un tracé qui n'est pas obligatoirement parallèle au tracé du profil méridien du retournement 10 de la nappe de carcasse 1, ledit tracé du brin 612 étant dit "du plus court chemin" dans la limite des possibilités, puisque ledit tracé ne peut pas, dans tous les cas de figures, être rectiligne pour cause de présence d'un rebord de jante. On définit, dans le cas du brin axialement extérieur d'une nappe de renforcement, ce tracé de "plus court chemin" comme étant un tracé qui, entre son extrémité supérieure E et son point de tangence T" au cercle parallèle au cercle circonscrit à la tringle 2 possède une longueur inférieure à la longueur du tracé de retournement 10 de carcasse, entre le point dudit retournement E' situé sur la droite perpendiculaire au profil méridien du retournement d'armature de carcasse abaissé de E et le point de tangence T''' dudit retournement à la tringle, T"' étant situé sur la même droite parallèle à l'axe de rotation que le point T". Il est évident que ce tracé peut être parallèle au tracé du retournement de nappe de carcasse, et sera toujours de plus court chemin par rapport audit tracé de retournement, puisqu'à l'intérieur du cercle représentant la courbure concave du tracé du retournement, du fait du choix de la position axialement à l'extérieur du brin 612 par rapport au retournement 10 d'armature de carcasse.

La présence du brin 612 de la deuxième nappe 61 de la première armature de renforcement 6 de bourrelet, de hauteur supérieure à la hauteur H_{C} du crochet de jante et dont le tracé répond à la définition de tracé de plus court chemin, permet une meilleure reprise des efforts de tension au niveau du retournement et en conséquence permet une diminution des contraintes en extrémités de retournements. Ladite présence rend inutile la présence d'un brin axialement extérieur 602 de première nappe 60 dont la hauteur supérieure est supérieure à la hauteur du crochet de jante : ainsi la hauteur H_{LI} peut aussi être inférieure à la hauteur H_{C}.

Le bourrelet est complété, de même que dans le cas des deux variantes décrites précédemment; par une deuxième armature de renforcement 7, Que ce soit dans le cas de la variante de la figure 2 ou de la variante de la figure 3, la structure du bourrelet conforme à l'invention comprend aussi une deuxième armature de renforcement 7 formée aussi d'une seule nappe 7 de câbles métalliques inextensibles en acier parallèles entre eux dans la nappe et faisant avec la direction circonférentielle un angle de 22°, ladite nappe 7 étant située axialement à l'extérieur du brin axialement extérieur 612 de la deuxième nappe 61 de la première armature 6 de renforcement de bourrelet.

## Revendications

1. Pneumatique de hauteur sur jante H, comprenant au moins une armature de carcasse radiale (1), formée d'au moins une nappe d'éléments de renforcement inextensibles et ancrée dans chaque bourrelet B à une tringle (2) pour former un retournement (10) dont l'extrémité est situé à une distance radiale H_{RNC} de la base D de la tringle, chaque bourrelet B étant renforcé par au moins deux armatures additionnelles de renforcement, au moins une première armature (6) formée d'éléments de renforcement métalliques radiaux et au moins une deuxième armature (7) formée d'éléments métalliques faisant avec la direction circonférentielle un angle α tel que 0° ≤ α ≤ 45°, **caractérisé en ce que**, vue en section méridienne, la première armature de renforcement (6) est formée d'au moins une nappe (60) d'éléments inextensibles, enroulée autour de la tringle d'ancrage (2) de l'armature de carcasse (1) à l'intérieur de ladite armature de carcasse (1), pour former deux brins (601, 602), de sorte que le brin axialement intérieur (601), entre l'extrémité radialement inférieure A de son bord radialement supérieur, adjacent à l'armature de carcasse (1), et son point de tangence T à la tringle d'ancrage (2) suive un tracé AT rectiligne dit du plus court chemin, et que l'extrémité radialement supérieure dudit brin axialement intérieur (601) soit radialement située à une distance H_{LI} de la base de la tringle D, comprise entre 0,216 et 0,432 fois la hauteur H, le brin axialement extérieur (602) situé axialement à l'intérieur du retournement (10) de l'armature de carcasse (1) ayant son extrémité radialement supérieure radialement moins éloignée de l'axe de rotation que l'extrémité du retournement (10) d'armature de carcasse et la distance H_{LE} séparant ladite extrémité de la base D de la tringle étant comprise entre 0,2 et 0,8 fois la hauteur H_{RNC} du retournement (10) d'armature de carcasse (1), la deuxième armature (7) d'éléments inclinés par rapport à la direction radiale n'étant pas enroulée autour de ladite tringle d'ancrage (2) et disposée axialement à l'extérieur du retournement (10) d'armature de carcasse (1).

2. Pneumatique selon la revendication 1, **caractérisé en ce que** le profil méridien de l'armature de carcasse (1), à partir de son point A', disposé sur la même droite parallèle à l'axe de rotation du pneumatique que A, jusqu'à son point de tangence T' avec la tringle (2), possède un tracé A'T', vu en section transversale, parallèle au tracé AT dé la portion rectiligne du brin axialement intérieur (601) de la nappe de renforcement (60).

3. Pneumatique selon l'une des revendications 1 à 2, **caractérisé en ce que** les éléments de renforcement radiaux de la première nappe (60) de la première armature (6) de renforcement de bourrelet sont des câbles en acier.

4. Pneumatique selon la revendication 3, **caractérisé en ce que** l'armature de renforcement (6) comprend une deuxième nappe (61) d'armature de renforcement (6), composée d'éléments de renforcement radiaux et enroulée autour de la tringle (2), pour former deux brins : un brin axialement extérieur (612), situé axialement à l'extérieur du retournement (10) d'armature de carcasse (1) et dont l'extrémité radialement supérieure se trouve à une distance radiale H_{LE2} de la base de la tringle D comprise entre 0,4 et 1,2 fois la distance H_{RNC}, l'extrémité du brin axialement intérieur (611) étant distante de ladite base D d'une quantité inférieure à la hauteur H_{C} du crochet de jante sur laquelle sera monté le pneumatique.

5. Pneumatique selon la revendication 4, **caractérisé en ce que** le profil du brin axialement extérieur (612) de ladite deuxième nappe (61) d'armature de renforcement (6) de bourrelet a un tracé dit de plus court chemin qui, entre son extrémité supériéure E et son point de tangence T" au cercle parallèle au cercle circonscrit à la tringle (2), possède une longueur inférieure à la longueur du tracé du profil méridien du retournement (10) de carcasse, entre le point dudit retournement E' situé sur la droite perpendiculaire au profil méridien du retournement (10) d'armature de carcasse (1) abaissé de E et le point de tangence à la tringle T''' situé sur la même droite parallèle à l'axe de rotation que le point T".

6. Pneumatique selon l'une des revendications 4 ou 5, **caractérisé en ce que** la deuxième armature (7) d'éléments inclinés par rapport à la direction radiale est disposée axialement à l'extérieur du brin axialement extérieur (612) de la deuxième nappe de renforcement (61) de la première armature de renforcement (6) de bourrelet.

7. Pneumatique selon l'une des revendications 4 à 6, **caractérisé en ce que** les éléments de renforcement radiaux de la deuxième nappe (61) de la première armature (6) de renforcement de bourrelet sont des éléments métalliques inextensibles, en acier et sous forme de câbles.

## Patentansprüche

1. Luftreifen mit einer Höhe H über der Felge, der mindestens eine radiale Karkassenbewehrung (1) aufweist, die aus mindestens einer Lage aus undehnbaren Verstärkungselementen gebildet und in jedem Wulst B an einem Wulstkern (2) verankert ist, um einen Umschlag (10) zu bilden, dessen Ende unter einem radialen Abstand H_{RNC} von der Basis D des Wulstkernes gelegen ist, wobei jeder Wulst B von mindestens zwei zusätzlichen Verstärkungsbewehrungen verstärkt ist, mindestens eine erste Bewehrung (6) aus metallischen, radialen Verstärkungselementen gebildet ist und mindestens eine zweite Bewehrung (7) aus metallischen Elementen gebildet ist, die mit der Umfangsrichtung einen Winkel α so bilden, daß 0° ≤ α ≤ 45°, **dadurch gekennzeichnet, daß**, im Meridianschnitt gesehen, die erste Verstärkungsbewehrung (6) aus mindestens einer Lage (60) aus undehnbaren Elementen gebildet ist, die rund um den Verankerungswulstkern (2) der Karkassenbewehrung (1) im Inneren der genannten Karkassenbewehrung (1) herumgewickelt ist, um zwei Trums (601, 602) derart zu bilden, daß das axial innere Trum (601), zwischen dem radial unteren Ende A seines radial oberen Randes neben der Karkassenbewehrung (1) und seinem Tangierungspunkt T am Verankerungswulstkern (2), einem geradlinigen Verlauf AT folgt, der kürzester Weg genannt ist, und daß das radial obere Ende des genannten, axial inneren Trums (601) radial in einem Abstand H_{LI} von der Basis D des Wulstkerns sitzt, der zwischen dem 0,216-fachen und 0,432-fachen der Höhe H liegt, wobei das axial äußere Trum (602), das axial auf der Innenseite der Umschlags (10) der Karkassenbewehrung (1) liegt, mit seinem radial oberen Ende radial weniger von der Drehachse entfernt ist als das Ende des Umschlags (10) der Karkassenbewehrung, und der Abstand H_{LE}, der das genannte Ende von der Basis D des Wulstkernes trennt, zwischen dem 0,2-fachen und dem 0,8-fachen der Höhe H_{RNC} des Umschlags (10) der Karkassenbewehrung (1) liegt, während die zweite Bewehrung (7) aus gegenüber der radialen Richtung geneigten Elementen nicht um den genannten Verankerungswulstkern (2) herumgewickelt ist und auf der Außenseite des Umschlags (10) der Karkassenbewehrung (1) angeordnet ist.

2. Reifen nach Anspruch 1, **dadurch gekennzeichnet, daß** das Meridianprofil der Karkassenbewehrung (1), von seinem Punkt A' ausgehend, der auf derselben Geraden parallel zur Drehachse des Reifens wie A angeordnet ist, bis zu seinem Tangentenpunkt T mit dem Wulstkern (2) einen Verlauf A'T' besitzt, der, im Querschnitt gesehen, parallel zum Verlauf AT des geradlinigen Abschnitts des axial inneren Trums (601) der Verstärkungslage (60) verläuft.

3. Reifen nach einem der Ansprüche 1 bis 2, **dadurch gekennzeichnet, daß** die radialen Verstärkungselemente der ersten Lage (60) der ersten Verstärkungsbewehrung (6) des Wulstes Stahlseile sind.

4. Reifen nach Anspruch 3, **dadurch gekennzeichnet, daß** die Verstärkungsbewehrung (6) eine zweite Lage (61) der Verstärkungsbewehrung (6) aufweist, die aus radialen Verstärkungselementen zusammengesetzt und um den Wulstkern (2) herumgeschlagen ist, um zwei Trums zu bilden: ein axial äußeres Trum (612), das axial auf der Außenseite des Umschlags (10) der Karkassenbewehrung (1) sitzt und dessen radial oberes Ende sich in einem radialen Abstand H_{LE2} von der Basis D des Wulstkerns befindet, der zwischen dem 0,4-fachen und dem 1,2-fachen des Abstandes H_{RNC} liegt, während das Ende des axial inneren Trums (611) zur genannten Basis D um einen Betrag beabstandet ist, der kleiner ist als die Höhe H_{C} der Krempe der Felge, auf der der Reifen montiert wird.

5. Reifen nach Anspruch 4, **dadurch gekennzeichnet, daß** das Profil des axial äußeren Trum (612) der genannten, zweiten Lage (61) der Wulst-Karkassenbewehrung (6) einen Verlauf hat, der der kürzeste Weg genannt wird, der zwischen seinem oberen Ende E und seinem Tangentenpunkt T" auf dem zu jedem Kreis parallelen Kreis, der dem Wulstkern (2) umschrieben ist, eine Länge besitzt, die kleiner ist als die Länge des Verlaufes des Meridianprofils des Karkassenumschlags (10) zwischen dem Punkt E' des genannten Umschlags, der auf der zum Meridianprofil des Umschlags (10) der Karkassenbewehrung (1) senkrechten Geraden, die sich von E abwärts erstreckt, und dem Tangentenpunkt T''' am Wulstkern liegt, der auf derselben Geraden parallel zur Drehachse wie der Punkt T" sitzt.

6. Reifen nach einem der Ansprüche 4 oder 5, **dadurch gekennzeichnet, daß** die zweite Bewehrung (7) aus Elementen, die bezüglich der Radialrichtung geneigt sind, axial auf der Außenseite des axial äußeren Trum (612) der zweiten Verstärkungslage (61) der ersten Verstärkungsbewehrung (6) des Wulstes angeordnet ist.

7. Reifen nach einem der Ansprüche 4 bis 6, **dadurch gekennzeichnet, daß** die radialen Verstärkungselemente der zweiten Lage (61) der ersten Verstärkungsbewehrung (6) des Wulstes undehnbare, metallische Elemente aus Stahl und in Form von Seilen sind.

## Claims

1. A tyre of height on rim H, comprising at least one radial carcass reinforcement (1), formed of at least one ply of inextensible reinforcement elements and anchored in each bead B to a bead wire (2) to form an upturn (10), the end of which is located at a radial distance H_{RNC} from the base D of the bead wire, each bead B being reinforced by at least two additional reinforcement armatures, at least one first armature (6) formed of radial metallic reinforcement elements and at least one second armature (7) formed of metallic elements which form with the circumferential direction an angle α such that 0° ≤ α ≤ 45°, **characterised in that**, viewed in meridian section, the first reinforcement armature (6) is formed of at least one ply (60) of inextensible elements which is wound around the anchoring bead wire (2) of the carcass reinforcement (1) on the inside of said carcass reinforcement (1) to form two strands (601, 602), such that the axially inner strand (601), between the radially lower end A of its radially upper edge adjacent to the carcass reinforcement (1) and its point of tangency T to the anchoring bead wire (2), follows a rectilinear trace AT referred to as "shortest-path", and that the radially upper end of said axially inner strand (601) is radially located at a distance H_{LI} from the base of the bead wire D of between 0.216 and 0.432 times the height H, the axially outer strand (602) which is located axially to the inside of the upturn (10) of the carcass reinforcement (1) having its radially upper end radially less far from the axis of rotation than the end of the carcass reinforcement upturn (10) and the distance H_{LE} between said end of the base D of the bead wire being between 0.2 and 0.8 times the height H_{RNC} of the upturn (10) of the carcass reinforcement (1), the second armature (7) of elements inclined relative to the radial direction not being wound around said anchoring bead wire (2) and arranged axially to the outside of the upturn (10) of the carcass reinforcement (1).

2. A tyre according to Claim 1, **characterised in that** the meridian profile of the carcass reinforcement (1), starting from the point A' thereof located on the same straight line parallel to the axis of rotation of the tyre as A, up to its point of tangency T' with the bead wire (2), has a trace A'T' which, viewed in cross-section, is parallel to the trace AT of the rectilinear portion of the axially inner strand (601) of the reinforcement ply (60).

3. A tyre according to one of Claims 1 to 2, **characterised in that** the radial reinforcement elements of the first ply (60) of the first bead reinforcement armature (6) are steel cables.

4. A tyre according to Claim 3, **characterised in that** the reinforcement armature (6) comprises a second ply (61) of the reinforcement armature (6), composed of radial reinforcement elements and wound around the bead wire (2) so as to form two strands: one axially outer strand (612), located axially to the outside of the upturn (10) of the carcass reinforcement (1) and the radially upper end of which is at a radial distance H_{LE2} from the base of the bead wire D of between 0.4 and 1.2 times the distance H_{RNC}, the end of the axially inner strand (611) being distant from said base D by a quantity less than the height HC of the rim hook on which the tyre will be mounted.

5. A tyre according to Claim 4, **characterised in that** the profile of the axially outer strand (612) of said second ply (61) of the bead reinforcement armature (6) has a "shortest-path" trace which, between its upper end E and its point of tangency T" with the circle parallel to the circle circumscribed on the bead wire (2), has a length less than the length of the trace of the meridian profile of the carcass upturn (10), between that point of said upturn E' which is located on the straight line perpendicular to the meridian profile of the upturn (10) of the carcass reinforcement (1) lowered by E and the point of tangency T''' with the bead wire located on the same straight line parallel to the axis of rotation as the point T".

6. A tyre according to one of Claims 4 or 5, **characterised in that** the second armature (7) of elements inclined relative to the radial direction is arranged axially to the outside of the axially outer strand (612) of the second reinforcement ply (61) of the first bead reinforcement armature (6).

7. A tyre according to one of Claims 4 to 6, **characterised in that** the radial reinforcement elements of the second ply (61) of the first bead reinforcement armature (6) are inextensible metallic elements, made of steel and in the form of cables.
